# EUROPÄISCHE PATENTSCHRIFT

(11) **EP 1 373 763 B1**
(45) Veröffentlichungstag und Bekanntmachung des Hinweises auf die Patenterteilung: **01.06.2005**
(21) Anmeldenummer: 02729769.6
(22) Anmeldetag: 08.03.2002
(51) Int. Cl.: F16H 57/02

(54) **GETRIEBE-ANTRIEBSEINHEIT**
TRANSMISSION-DRIVE UNIT
UNITE D'ENTRAINEMENT DE MECANISME

(30) Priorität: 24.03.2001 DE 10114453
(43) Veröffentlichungstag der Anmeldung: 02.01.2004
(73) Patentinhaber: ROBERT BOSCH GMBH, 70442 Stuttgart (DE)
(72) Erfinder: OBERLE, Hans-Juergen, 76437 Raststatt (DE); HUESGES, Mario, 77830 Buehlertal (DE)
(86) Internationale Anmeldenummer: PCT/DE2002/000842
(87) Internationale Veröffentlichungsnummer: WO 2002/077492

(56) Entgegenhaltungen:
- EP-A- 0 943 842
- DE-U- 29 702 525
- US-A- 5 212 999
- US-A- 5 213 000

## Beschreibung

### Stand der Technik

Die Erfindung betrifft eine Getriebe-Antriebseinheit nach der Gattung des unabhängigen Anspruchs.

Mit dem deutschen Gebrauchsmuster GM 297 02 525.2 ist eine Vorrichtung bekannt geworden, die beispielsweise zum Verschieben von Fensterscheiben, Schiebedächern oder Sitzen eingesetzt wird. Die Aufgabe dieses Gebrauchsmusters ist es, ein unerwünschtes Längsspiel der Ankerwelle mittels eines stirnseitig angebrachten Dämpfgummis zu vermeiden. Auf die Ankerwelle ist eine Schnecke aufgepreßt, die das Drehmoment des Elektromotors auf das Schneckenrad überträgt. Das vordere Ende der Ankerwelle wird dabei in einer Drehlageraufnahmebuchse geführt, damit die Schnecke nicht radial ausweicht. An ihren Stirnseiten ist die Ankerwelle über Anlaufscheiben sowie über ein Dämpfungsmittel am Gehäuse abgestützt. Im Bereich der Stirnseite der Ankerwelle weist das Gehäuse hierzu eine Ausnehmung auf, in die ein Dämpfgummi als Dämpfungsmittel eingepreßt ist. Unter Belastung drückt die Ankerwelle die Anlaufscheibe gegen das Dämpfgummi, wodurch sich dieses verformt, bis die Anlaufscheibe auf einer Schulter des Gehäuses aufliegt. Nachteilig ist bei dieser Vorrichtung zum Längsspielausgleich der Ankerwelle der relativ große beanspruchte Bauraum in axialer Verlängerung der Ankerwelle. Für die Anwendung einer solchen Getriebe-Antriebseinheit zur Sitzverstellung in einem Kraftfahrzeug ist beispielsweise eine verkürzte Baulänge der Getriebe-Antriebseinheit in axialer Richtung besonders erwünscht.

Die EP 0 943 842 A1, die als nächstliegender Stand der Technik angesehen wird, zeigt ein Schneckengetriebe, bei dem eine Ankerwelle mittels Kugellager in einem Getriebegehäuse gelagert ist. Dabei liegt der äußere Ring des Kugellagers an einem äußeren Bund eines Druckrings an, der sich wiederum über ein Tellerfederpaket axial an der Getriebegehäusewand abstützt. Axial beabstandet zur Stirnseite der Ankerwelle ist an der Gehäusewand ein Anschlagspuffer angeordnet, an dem sich bei einer sehr großen Überbelastung die Ankerwelle abstützt.

### Vorteile der Erfindung

Die erfindungsgemäße Vorrichtung mit den Merkmalen des Anspruchs 1 hat den Vorteil, dass das Ankerlängsspiel wirksam eliminiert wird, wobei durch die Verwendung der topfförmigen Anlaufhülse gleichzeitig die axiale Baulänge der Getriebe-Antriebseinheit reduziert wird. Die Vormontage der topfförmigen Anlaufhülse ermöglicht eine einfache Montage der Ankerwelle, wobei diese gleichzeitig sowohl axial gedämpft wird, als auch radial gelagert werden kann. Die Vorspannung, mit der das Dämpfungsmittel durch die Ankerwelle belastet wird, kann ferner unabhängig von der für einen Festsitz der bereits bekannten Vorrichtung erforderlichen Vorspannung gewählt werden. Da die Vorspannung direkt auch aus der herstellungsbedingt toleranzbehafteten Länge der Ankerwelle resultiert, wird deren Herstellung bei der erfindungsgemäßen Vorrichtung auf einfache Weise von diesem Einfluß entkoppelt.

Durch die in den Unteransprüchen aufgeführten Merkmale sind vorteilhafte Weiterbildungen der Vorrichtung nach dem Hauptanspruch möglich. Ist das Dämpfungsmittel radial um die zylindrische Außenwand der Anlaufhülse angeordnet, so erstreckt sich die gesamte Länge des Dämpfungsmittels innerhalb der Baulänge der Ankerwelle. Dadurch kann eine Axialdämpfung der Ankerwelle erzielt werden, ohne dass sich die axiale Baulänge der Getriebe-Antriebseinheit gegenüber der ungedämpften Ausführung verlängert. Somit steht wertvoller Bauraum für andere Bauteile oder für den Komfort der Fahrgäste des Kraftfahrzeugs zur Verfügung.

In vorteilhafter Weise ist das Dämpfungsmittel ringförmig ausgeformt, so dass die Kraft von der Ankerwelle gleichmäßig über den gesamten Umfang derselben auf das Dämpfungsmittel übertragen wird. Dadurch wird das gesamte Volumen zwischen der Anlaufhülse und der Ausformung im Gehäuseteil effizient genutzt und ein gleichmäßiges Verschieben der Anlaufhülse ohne Verkanten gewährleistet.

Das problemlose Verschieben der Anlaufhülse unter Belastung der Ankerwelle wird günstigerweise durch eine zylindermantelförmige Führungsfläche auf der Anlaufhülse realisiert, die entlang eines Wandabschnitts der Ausformung im Gehäuseteil entlang gleitet (Passung). Vorteilhafterweise kann die Anlaufhülse auch mehrere Führungsflächen aufweisen, wobei eventuell angebrachte Ausformungen zur Verdrehsicherung die Führungsfläche nicht beeinträchtigen.

Wird das Schneckenrad in seiner Bewegung plötzlich gestoppt (z.B. wenn ein Teil mittels der Getriebe-Antriebseinheit gegen einen Hindernis bewegt wird), so wird die Energie durch die axiale Bewegung der Ankerwelle auf das Dämpfungsmittel übertragen. Hierzu weist die Anlaufhülse z.B. eine ringförmige Schulter auf, an der die Stirnfläche des Dämpfungsmittels anliegt und dieses gegen eine Gegenschulter im Gehäuseteil drückt. Das Zusammenspiel von Schulter-Dämpfungsmittel-Gegenschulter ermöglicht eine Dämpfung der axialen Kräfte, ohne dass hierfür Bauraum an der Stirnseite der Ankerwelle benötigt wird.

Weist die Anlaufhülse in Richtung zum Gehäuseteil zumindest einen Anschlag auf, und ist an der Ausformung des Gehäuseteils zumindest ein korrespondierender Gegenanschlag ausgebildet, ist in einfacher Weise die maximale Pressung des Dämpfungsmittels festgelegt. Dadurch ist das Dämpfungsmittel vor auftretenden Belastungsspitzen während des Betriebs geschützt, wodurch sein Alterungsprozeß gehemmt und die Lebensdauer erhöht wird.

Vorteilhafterweise kann der maximal zulässige axiale Verschiebeweg der Anlaufhülse, und damit auch der Ankerwelle, durch die Länge des Dämpfungsmittels in unbelastetem Zustand vorgegeben werden. Die Vorspannung in der Einbaulage kann in einfacher Weise gewährleistet werden, indem die Fertigungslänge des Dämpfungsmittels in unbelastetem Zustand entsprechend der Fertigungstoleranz der Ankerwelle gewählt wird.

Besonders vorteilhaft ist es, die Anlaufhülse als Lager oder Stützlager auszubilden, weil dadurch auf sehr kleinem Bauraum gleichzeitig eine radiale und axiale Abstützung der Ankerwelle als auch eine Axialdämpfung erreicht werden kann. Idealerweise wird hierbei das Lager schon vor dem Einsetzen der Ankerwelle in das Gehäuse vormontiert. Die Ankerwelle kann durch die Lagerung zusätzliche Radialkräfte aufnehmen, ohne dass hierfür zusätzlicher Bauraum benötigt wird. Weisen die Führungsflächen der Anlaufhülse genügend Spiel auf, kann ein solches Lager mittels des Dämpfungsmittels auch einen Versatz der Ankerwelle ausgleichen. Dies ist besonders bei einer Überbestimmung der Ankerwellen-Lagerung durch drei Radiallager notwendig.

Weist die Außenwand der Anlaufhülse und/oder die Innenwand der Ausformung des Gehäuseteils eine Rippenstruktur oder andersartige Struktur auf, stehen dem Dämpfungsmittel, beispielsweise einem Weichgummi, genügend Hohlräume zur Verfügung, um dessen Volumenänderung bei maximaler Pressung aufnehmen zu können. Dadurch wird der Einfluß des Preßsitzes auf die Federrate des Dämpfungsmittels minimiert. Die Rippenstruktur erlaubt auch eine Transportsicherheit bei der Montage bis zum Einsetzen der Ankerwelle, da das Dämpfungsmittel zuerst auf der Anlaufhülse fixiert wird, und diese auch von unten in die Ausformung des Gehäuseteils eingesetzt werden kann. Dadurch ist eine vorteilhafte Vormontage der Anlaufhülse in das Gehäuse bei einer "Überkopf-Anordnung" desselben möglich.

Besonders günstig ist es, die Stirnflächen der Ausformung und/oder der Anlaufhülse, an denen das Dämpfungsmittel anliegt, mit einer rauhen strukturierten Oberfläche zu versehen. Durch den relativ großen Radius des Dämpfungsmittels (größer als der Durchmesser der Ankerwelle) wird somit allein durch die Reibung ein Verdrehen der Anlaufhülse im Gehäuseteil verhindert.

Als eine alternative Verdrehsicherung weist die Anlaufhülse beispielsweise an ihrem oberen Rand oder am "Topfboden" Ausformungen auf, die in entsprechende Gegenausformungen des Gehäuseteils eingreifen. Durch diese Anordnungen können auch größere Verdrehkräfte abgefangen werden.

Für die Verwendung bestimmter Dämpfungsmittel, wie z.B. Federelemente, insbesondere eine Spiralfeder, ist es vorteilhaft, wenn diese weder an der Außenwand der Anlaufhülse noch an der Wand der Ausformung im Gehäuseteil anliegen. Dadurch hat das Dämpfungsmittel genügend Spiel, um sich bei Druckbeanspruchung ungestört verformen zu können.

Für die Montage der Ankerwelle in das Gehäuse ist ein Preßsitz des Dämpfungsmittels auf der Anlaufhülse besonders günstig, da diese zusammen als komplette Einheit vormontiert werden können. Wird diese Einheit vor der Montage der Ankerwelle in das Gehäuseteil eingepreßt, kann dieses vorteilhafterweise auch in einer "Überkopf"-Montageanordnung geschehen.

Die Verwendung eines Federelements als Dämpfungsmittel erlaubt eine hohe Dauerbelastung der Axialdämpfung bei hoher Lebenszeit. Dies ist beispielsweise besonders wichtig für die Anwendung bei automatischen Schaltgetrieben, wo hohe Anforderungen an die Dauerbelastungen und hohe Sicherheitsanforderungen gestellt werden. Die Ausführung als Spiralfeder ist besonders vorteilhaft, da sich diese besonders einfach radial um die Anlaufhülse anordnen läßt, ohne viel Bauraum zu beanspruchen.

Für den Preßsitz des Dämpfungsmittels auf der Anlaufhülse und in der Ausformung des Gehäuseteils ist ein Dämpfgummi aus Weichgummi besonders günstig. Dadurch wird eine einfache Montage, geringe Herstellungskosten und mit N-Buthyl-Rubber auch eine ideale Federrate erzielt.

### Zeichnung

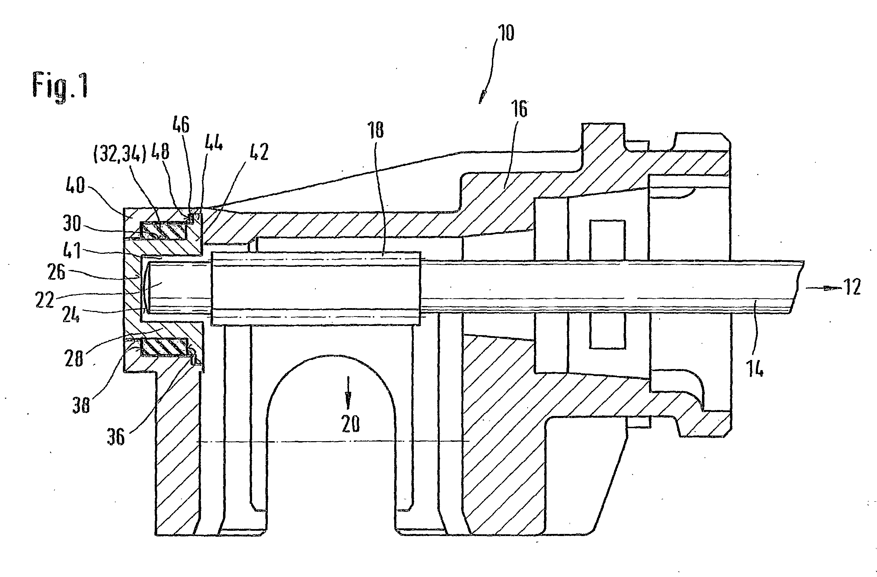

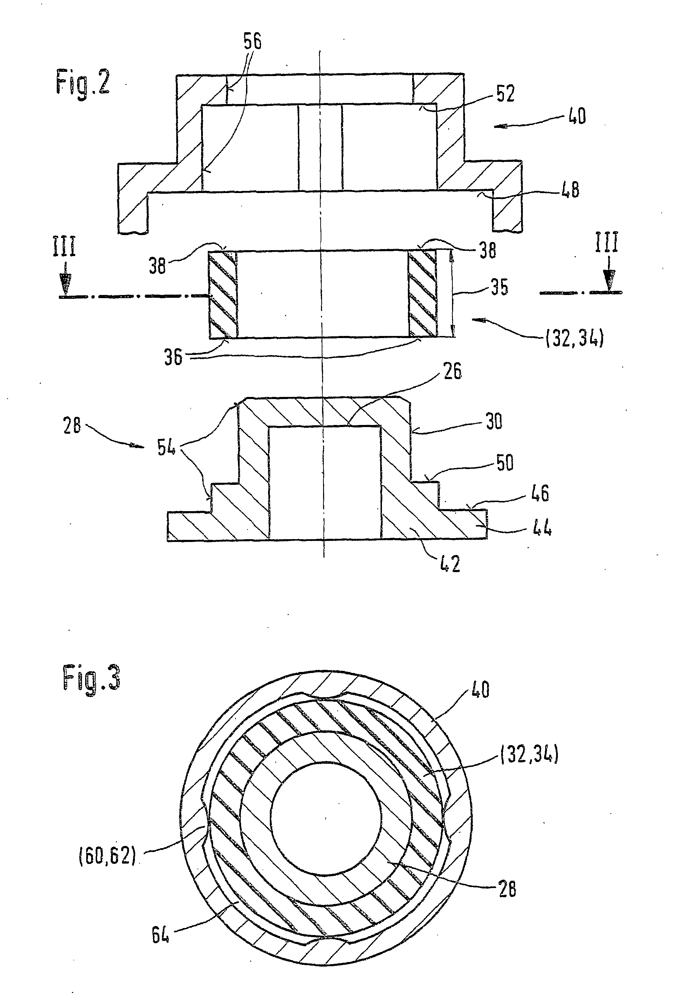

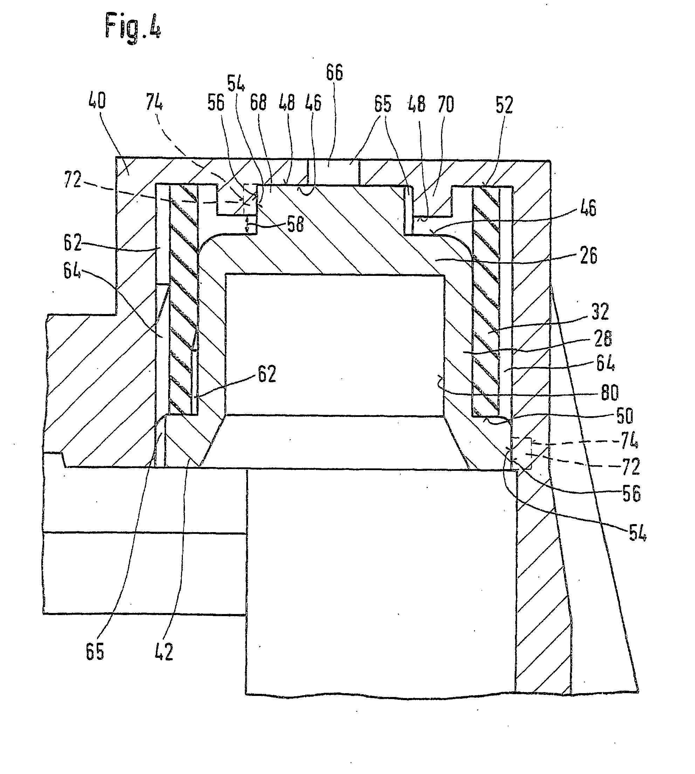

Ausführungsbeispiele der erfindungsgemäßen Vorrichtung sind in der nachfolgenden Beschreibung anhand der zugehörigen Zeichnungen näher erläutert. Es zeigen Figur 1 eine Getriebe-Antriebseinheit im Schnitt, Figur 2 eine Explosionsdarstellung der Axialdämpfung, Figur 3 einen Schnitt nach der Linie III-III in Figur 2 und Figur 4 ein weiteres Ausführungsbeispiel im Detail gemäß Figur 1.

### Beschreibung

In Figur 1 ist ein Teil einer Getriebe-Antriebseinheit 10 dargestellt, welches beispielsweise zum Verstellen von Sitzen in Kraftfahrzeugen verwendet wird. Ein nicht näher dargestellter elektrischer Motor 12 weist eine mehrfach gelagerte Ankerwelle 14 auf, die sich bis in den Bereich des Getriebegehäuses 16 erstreckt. Auf der Ankerwelle 14 ist eine Schnecke 18 angeordnet, die mit einem nicht dargestellten Abtriebsrad 20 in Wirkverbindung steht. An ihrem einen Ende 22 liegt die Ankerwelle 14 mit ihrer Stirnseite 24 am Boden 26 einer topfförmigen Anlaufhülse 28 an. Um die Außenwand 30 der Anlaufhülse 28 ist als Dämpfungsmittel 32 ein ringförmiges (röhrenförmiges) Dämpfgummi 34 angeordnet, über dessen Stirnflächen 36, 38 sich die Anlaufhülse 28 am Gehäuseteil 40 des Getriebegehäuses 16 abstützt. Die Anlaufhülse 28 weist an ihrem oberen Rand 42 einen Fortsatz 44 auf, der als Anschlag 46 zur Begrenzung der axialen Verschiebung der Anlaufhülse 28 gegen einen Gegenanschlag 48 am Gehäuseteil 40 auf.

Bei eingebauter Ankerwelle 14 befindet sich das Dämpfungsmittel 32 unter Vorspannung, da die Stirnseite 24 der Ankerwelle 14 die Anlaufhülse 28 gegen das Dämpfungsmittel 32 preßt. Wird das Abtriebsrad 20 während des Verstellbetriebs abrupt gestoppt (z.B. beim Fahren gegen einen Anschlag), kann sich die Ankerwelle 14 mitsamt der Anlaufhülse 28 unter Verformung des Dämpfmittels 32 in axialer Richtung leicht bewegen, bis der Anschlag 46 der Anlaufhülse 28 am Gegenanschlag 48 des Gehäuseteils 40 anliegt. Dadurch wird die frei werdende Antriebsenergie gedämpft und auch störende Klackgeräusche bei Drehrichtungsänderungen vermieden.

Figur 2 zeigt die Anlaufhülse 28 vor dem Einbau in das Gehäuseteil 40 gemäß Figur 1 in vergrößerter Darstellung. Die Anlaufhülse 28 weist eine ringförmige Schulter 50 auf, an die bei Montage des Dämpfungmittels 32 dessen ringförmige Stirnfläche 36 anliegt. Die andere Stirnseite 38 des Dämpfungsmittels 32 drückt nach dem Einbau gegen eine ebenfalls ringförmige Gegenschulter 52 des Gehäuseteils 40. Die Flächen der Schulter 50 und der Gegenschulter 52 sind jeweils profiliert oder strukturiert ausgeführt, um ein Verdrehen des Dämpfungsmittels 32 und der Anlaufhülse 28 zu verhindern. Die Anlaufhülse 28 weist hier zwei Führungsflächen 54 (Zylindermantel) auf, die beim Verschieben der Anlaufhülse 28 eine axiale Führung entlang der Gegenflächen 56 der Ausformung 41 im Gehäuseteil 40 gewährleisten. Nach Einbau der Ankerwelle 14 unter Beaufschlagung des Dämpfungsmittels 32 mit einer Vorspannung ist der verfügbare axiale Verschiebeweg der Anlaufhülse 28 durch den Abstand 58 des Anschlags 46 vom Gegenanschlag 48 gegeben.

Figur 3 zeigt einen Schnitt durch die in das Gehäuseteil 40 vormontierte Anlaufhülse 28, bevor die Ankerwelle 14 eingesetzt wird. Die Ausformung 41 des Gehäuseteils 40 weist eine Rippenstruktur 60 auf, die im Ausführungsbeispiel durch vier axial verlaufende Preßrippen 62 realisiert wird. Das Dämpfungsmittel 32 ist hier direkt auf die Außenfläche 30 der Anlaufhülse 28 - ohne Rippenstruktur - aufgepreßt. Diese Einheit wird bei der Vormontage durch die Preßrippen 62 in der Ausformung 41 des Gehäuseteils 40 gehalten. Durch die Rippenstruktur 60 wird ein Hohlraum 64 geschaffen, der die Volumenänderung des Dämpfungsmittels 32 bei axialem Anpreßdruck aufnimmt.

Ein weiteres Ausführungsbeispiel einer vormontierten Anlaufhülse 28 ist in Figur 4 dargestellt. Hier sind sowohl an der Ausformung 41 als auch an der Außenwand 30 der Anlaufhülse 28 Preßrippen 62 angeformt, die eine Fixierung bei der Vormontage gewährleisten und einen Hohlraum 64 zur Ausdehnung des Dämpfungsmittels 32 zur Verfügung stellen.

Zur besseren Vormontage der Anlaufhülse 28 sind in den Wandungen des Gehäuseteils 40 und der Anlaufhülse 28 Entlüftungskanäle angeformt, die die Bildung eines Luftpolsters in der Ausformung 41 verhindern. Die Durchgangsöffnung 66 im Gehäuseteil 40 hat gleichzeitig werkzeugtechnische Bedeutung beim Spritzen des Getriebegehäuses 16. Das Dämpfungsmittel 32 liegt auch an einer Schulter 50 der Anlaufhülse 28 und einer Gegenschulter 52 des Gehäuseteils 40 an. Die Anlaufhülse 28 wird hier über eine Führungsfläche 54 am oberen äußeren Rand 42 oder an einem Fortsatz 68 des Bodens 26 der Anlaufhülse 28 geführt. Als Gegenfläche 56 am Gehäuseteil 40 dient hierfür eine am Gehäuseteil 40 angeformte Zylinderwand 70, die den Fortsatz 68 der Anlaufhülse 28 aufnimmt. Als axialer Anschlag 46 der Anlaufhülse 28 dient die Stirnseite des Fortsatzes 68 mit einem korrespondierenden ringförmigen Gegenanschlag 48 um die Durchgangsöffnung 66 des Gehäuseteils 40 herum oder aber der äußere ringförmige Bereich des Bodens 26, der bis gegen die Stirnseite der Zylinderwand 70 verschoben werden kann. Zur Verdrehsicherung kann die Anlaufhülse 28 an ihrem oberen Rand 42 und/oder an ihrem Bodenfortsatz 68 Ausformungen 72 (gestrichelt) aufweisen, die in korrespondierende Gegenausformungen 74 (gestrichelt) des Gehäuseteils 40 greifen. Im Ausführungsbeispiel sind diese Ausformungen/Gegenausformungen (72, 74) als Kerbverzahnung ausgeführt, können aber auch eine beliebige andersartige Gestalt haben.

In einer weiteren Variante dieses Ausführüngsbeispiels wird das Dämpfungsmittel 32 durch eine Spiralfeder gebildet. Hierbei weisen die Außenwand 30 der Anlaufhülse 28 und die Ausformung 41 keine Rippenstruktur auf, sondern die Spiralfeder ist frei beweglich (mit Spiel) zwischen den beiden Wandungen angeordnet. Das Ende 22 der Ankerwelle 14 wird dabei durch die Innenwand 80 der Anlaufhülse 28 radial gelagert, so dass die Ankerwelle 14 zusätzliche Radialkräfte aufnehmen kann.

Selbstverständlich können die einzelnen Merkmale der verschiedenen Ausführungsbeispiele beliebig kombiniert werden. Auch ist die Anwendung nicht auf Sitzverstellungen oder automatische Schaltgetriebe beschränkt, sondern findet überall Anwendung, wo der Axialspielausgleich der Ankerwelle die Baulänge der Getriebe-Antriebseinheit nicht negativ beeinflussen darf.

## Patentansprüche

1. Getriebe-Antriebseinheit (10) mit einem eine Ankerwelle (14) aufweisenden elektrischen Antriebsmotor (12) und einem diesem nachgeordneten Getriebe, insbesondere Schneckengetriebe, das mit dem Antriebsmotor (12) über eine Ankerwelle (14) wirkverbunden ist, wobei die Ankerwelle (14) zumindest an einem ihrer Enden(22) eine Stirnseite (24) aufweist, **dadurch gekennzeichnet, dass** die zumindest eine Stirnseite (24) an einem Boden (26) einer topfförmigen Anlaufhülse (28) anliegt, die über ein mindestens einteiliges Dämpfungsmittel (32) an einem Gehäuseteil (40) anliegt, wobei das Dämpfungsmittel (32) als ringförmiges Dämpfgummi (34) ausgebildet ist, das derart radial um eine Außenwand (30) der Anlaufhülse (28) angeordnet ist, dass die Anlaufhülse (28) zusammen mit der Ankerwelle (14) unter Verformung des Dämpfgummis (34) in axialer Richtung leicht verschiebbar ist.

2. Getriebe-Antriebseinheit (10) nach Anspruch 1, **dadurch gekennzeichnet, dass** die Anlaufhülse (28) entlang mindestens einer Führungsfläche (54) gegenüber einer Ausformung (41) in dem Gehäuseteil (40) axial verschiebbar ist.

3. Getriebe-Antriebseinheit (10) nach einem der Ansprüche 1 oder 2, **dadurch gekennzeichnet, dass** die Anlaufhülse (28) eine Schulter (50) und die Ausformung (41) im Gehäuseteil (40) eine Gegenschulter (52) aufweist, an der Stirnflächen (36, 38) des Dämpfungsmittels (32) anliegen.

4. Getriebe-Antriebseinheit (10) nach einem der vorgehenden Ansprüche, **dadurch gekennzeichnet, dass** die Anlaufhülse (28) einen Anschlag (46) und die Ausformung (41) im Gehäuseteil (40) einen Gegenanschlag (48) aufweist, die die axiale Verschiebung der Anlaufhülse (28) begrenzen.

5. Getriebe-Antriebseinheit (10) nach einem der vorgehenden Ansprüche, **dadurch gekennzeichnet, dass** eine Vorspannung des Dämpfungsmittels (32) durch dessen Baulänge (35) in unbelastetem Zustand und der Fertigungstoleranz der Ankerwellenlänge vorgebbar ist.

6. Getriebe-Antriebseinheit (10) nach einem der vorgehenden Ansprüche, **dadurch gekennzeichnet, dass** die Anlaufhülse (28) als Lagerung oder Stützlager für die Ankerwelle (14) ausgebildet ist.

7. Getriebe-Antriebseinheit (10) nach einem der vorgehenden Ansprüche, **dadurch gekennzeichnet, dass** die Anlaufhülse (28) an ihrer Außenwand (30) und/oder die Ausformung (41) des Gehäuseteils (40) eine Rippenstruktur (60) aufweist.

8. Getriebe-Antriebseinheit (10) nach einem der vorgehenden Ansprüche, **dadurch gekennzeichnet, dass** die Schulter (50) der Anlaufhülse (28) und/oder die Gegenschulter (52) der Ausformung (41) profiliert sind.

9. Getriebe-Antriebseinheit (10) nach einem der vorgehenden Ansprüche, **dadurch gekennzeichnet, dass** die Anlaufhülse (28) zur Verdrehsicherung Ausformungen (72) aufweist, die in Gegenausformungen (74) des Gehäuseteils (40) greifen.

10. Getriebe-Antriebseinheit (10) nach einem der vorgehenden Ansprüche, **dadurch gekennzeichnet, dass** das Dämpfungsmittel (32) zur Ausformung (41) des Gehäuseteils (40) und/oder zur Außenwand (30) der Anlaufhülse (28) Spiel aufweist.

11. Getriebe-Antriebseinheit (10) nach einem der vorgehenden Ansprüche, **dadurch gekennzeichnet, dass** das Dämpfungsmittel (32) in die Ausformung (41) des Gehäuseteils (40) und/oder auf die Außenwand (30) der Anlaufhülse (28) gepreßt ist.

12. Getriebe-Antriebseinheit (10) nach einem der vorgehenden Ansprüche, **dadurch gekennzeichnet, dass** das Dämpfgummi (34) aus Weichgummi mit zumindest überwiegend N-Buthyl-Rubber besteht.

## Claims

1. Transmission drive unit (10) having an electric drive motor (12) which has an armature shaft (14), and a transmission which is arranged downstream of said drive motor (12), in particular a worm gear mechanism which is actively connected to the drive motor (12) via an armature shaft (14), the armature shaft (14) having an end face (24) at least at one of its ends (22), **characterized in that** the at least one end face (24) bears against a base (26) of a pot-shaped run-up sleeve (28) which bears against a housing part (40) by means of an at least single-component damping means (32), the damping means (32) being embodied as an annular damping rubber (34) which is arranged radially about an external wall (30) of the run-up sleeve (28) in such a way that the run-up sleeve (28) can easily be displaced in the axial direction together with the armature shaft (14) accompanied by deformation of the damping rubber (34).

2. Transmission drive unit (10) according to Claim 1, **characterized in that** the run-up sleeve (28) can be displaced axially with respect to a recess (41) in the housing part (40), along at least one guide face (54).

3. Transmission drive unit (10) according to one of Claims 1 or 2, **characterized in that** the run-up sleeve (28) has a shoulder (50), and the recess (41) in the housing part (40) has a corresponding shoulder (52) against which end faces (36, 38) of the damping means (32) bear.

4. Transmission drive unit (10) according to one of the preceding claims, **characterized in that** the run-up sleeve (28) has a stop (46), and the recess (41) in the housing part (40) has a corresponding stop (48) and said stops (46, 48) limit the axial displacement of the run-up sleeve (28).

5. Transmission drive unit (10) according to one of the preceding claims, **characterized in that** a prestress of the damping means (32) can be predefined by its overall length (35) in the unloaded state and the fabrication tolerance of the length of the armature shaft.

6. Transmission drive unit (10) according to one of the preceding claims, **characterized in that** the run-up sleeve (28) is formed as a bearing or support bearing for the armature shaft (14).

7. Transmission drive unit (10) according to one of the preceding claims, **characterized in that** the run-up sleeve (28) has a rib structure (60) on its external wall (30) and/or the recess (41) of the housing part (40) has a rib structure (60).

8. Transmission drive unit (10) according to one of the preceding claims, **characterized in that** the shoulder (50) of the run-up sleeve (28) and/or the corresponding shoulder (52) of the recess (41) are shaped.

9. Transmission drive unit (10) according to one of the preceding claims, **characterized in that** the run-up sleeve (28) has, for the purpose of antitwist prevention, recesses (72) which engage in corresponding recesses (74) in the housing part (40).

10. Transmission drive unit (10) according to one of the preceding claims, **characterized in that** the damping means (32) has play with respect to the recess (41) in the housing part (40) and/or with respect to the external wall (30) of the run-up sleeve (28).

11. Transmission drive unit (10) according to one of the preceding claims, **characterized in that** the damping means (32) is pressed into the recess (41) in the housing part (40) and/or onto the external wall (30) of the run-up sleeve (28).

12. Transmission drive unit (10) according to one of the preceding claims, **characterized in that** the damping rubber (34) is composed of soft rubber with at least predominantly N-butyl rubber.

## Revendications

1. Unité d'entraînement de mécanisme (10) avec un moteur d'entraînement électrique (12) comportant un arbre d'induit (14) et un mécanisme disposé à la suite de celui-ci, en particulier un engrenage à vis sans fin, qui est en liaison active avec le moteur d'entraînement (12) par l'intermédiaire d'un arbre d'induit (14), l'arbre d'induit (14) présentant au moins à une de ses extrémités (22) une face frontale (24),
**caractérisée en ce que**
la face frontale (24) est appliquée sur un fond (26) d'une douille d'arrêt en forme de pot (28) montrée contre une partie de boîtier (40) par l'intermédiaire d'un moyen d'amortissement (32) en au moins une pièce, le moyen d'amortissement (32) se présentant sous la forme d'un caoutchouc amortisseur annulaire (34) disposé radialement autour d'une paroi extérieure (30) de la douille d'arrêt (28) de telle façon que la douille d'arrêt (28) soit aisément déplaçable en direction axiale en même temps que l'arbre d'induit (14) en déformant le caoutchouc amortisseur (34).

2. Unité d'entraînement de mécanisme (10) selon la revendication 1,
**caractérisée en ce que**
la douille d'arrêt (28) est déplaçable axialement le long d'au moins une surface de guidage (54) en face d'une déformation (41) dans la partie de boîtier (40).

3. Unité d'entraînement de mécanisme (10) selon l'une quelconque des revendications 1 ou 2,
**caractérisée en ce que**
la douille d'arrêt (28) présente un épaulement (50) et la déformation (41) dans la partie de boîtier (40) présente un épaulement opposé (52), sur lequel les faces frontales (36, 38) du moyen d'amortissement (32) sont appliquées.

4. Unité d'entraînement de mécanisme (10) selon l'une quelconque des revendications précédentes,
**caractérisée en ce que**
la douille d'arrêt (28) présente une butée (46) et la déformation (41) dans la partie de boîtier (40) une butée opposée (48), qui limitent le déplacement axial de la douille d'arrêt (28).

5. Unité d'entraînement de mécanisme (10) selon l'une quelconque des revendications précédentes,
**caractérisée en ce qu'**
une précontrainte du moyen d'amortissement (32) est pré-déterminable par sa longueur de montage (35) à l'état détendu et par la tolérance de fabrication de la longueur de l'arbre d'induit.

6. Unité d'entraînement de mécanisme (10) selon l'une quelconque des revendications précédentes,
**caractérisée en ce que**
la douille d'arrêt (28) est configurée comme appui ou palier de support pour l'arbre d'induit (14).

7. Unité d'entraînement de mécanisme (10) selon l'une quelconque des revendications précédentes,
**caractérisée en ce que**
la douille d'arrêt (28) présente sur sa paroi extérieure (30) et/ou la déformation (41) de la partie de boîtier (40) présente une structure nervurée (60).

8. Unité d'entraînement de mécanisme (10) selon l'une quelconque des revendications précédentes,
**caractérisée en ce que**
l'épaulement (50) de la douille d'arrêt (28) et/ou l'épaulement opposé (52) de la déformation (41) sont profilés.

9. Unité d'entraînement de mécanisme (10) selon l'une quelconque des revendications précédentes,
**caractérisée en ce que**
la douille d'arrêt (28) présente pour bloquer la rotation des déformations (72), qui sont en prise avec des déformations opposées (74) de la partie de boîtier (40).

10. Unité d'entraînement de mécanisme (10) selon l'une quelconque des revendications précédentes,
**caractérisée en ce que**
le moyen d'amortissement (32) présente un jeu par rapport à la déformation (41) de la partie de boîtier (40) et/ ou par rapport à la paroi extérieure (30) de la douille d'arrêt (28).

11. Unité d'entraînement de mécanisme (10) selon l'une quelconque des revendications précédentes,
**caractérisée en ce que**
le moyen d'amortissement (32) est pressé dans la déformation (41) de la partie de boîtier (40) et/ou sur la paroi extérieure (30) de la douille d'arrêt (28).

12. Unité d'entraînement de mécanisme (10) selon l'une quelconque des revendications précédentes,
**caractérisée en ce que**
le caoutchouc amortisseur (34) se compose de caoutchouc mou avec au moins principalement du caoutchouc N-butyle.
